# EUROPEAN PATENT SPECIFICATION

(11) **EP 3 423 611 B1**
(45) Date of publication and mention of the grant of the patent: **12.08.2026**
(21) Application number: 17708477.9
(22) Date of filing: 01.03.2017
(51) Int. Cl.: C23F 13/08, C23F 13/14, C23F 13/16, C22C 1/02, C22C 21/10

(54) **SYSTEM AND METHOD FOR CATHODIC PROTECTION BY DISTRIBUTED SACRIFICIAL ANODES**
SYSTEM UND VERFAHREN ZUM KATHODISCHEN SCHUTZ DURCH VERTEILTE OPFERANODEN
SYSTÈME ET PROCÉDÉ DE PROTECTION CATHODIQUE PAR ANODES SACRIFICIELLES DISTRIBUÉES

(30) Priority: 03.03.2016 NO 20160374
(43) Date of publication of application: 09.01.2019
(73) Proprietor: Vetco Gray Scandinavia AS, 1338 Sandvika (NO)
(72) Inventor: ARTUN, Lars, 1338 NO Sandvika (NO); IANNUZZI, Mariano, 1338 NO Sandvika (NO)
(74) Representative: Novagraaf Group
(86) International application number: PCT/EP2017/054806
(87) International publication number: WO 2017/149030

(56) References cited:
- EP-A2- 2 226 409
- EP-A2- 2 592 175
- WO-A1-99/18261
- CN-A- 101 033 552
- JP-A- 2000 204 427
- US-A- 3 260 661
- US-A- 3 847 560
- US-A1- 2010 159 272
- US-B2- 8 697 251

## Description

### TECHNICAL FIELD OF THE INVENTION

The present invention relates generally to cathodic protection of metallic objects subjected to corrosion. More precisely, the invention relates to a system and a method for cathodic protection by deposition of protective sacrificial coatings onto the surface of a metallic, ferrous or non-ferrous, object. In analogy, herewith the invention also relates to a subsea component carrying the cathodic protection system of the present invention.

The system and method of the present invention drastically reduces the total cathode area by distributing the sacrificial anode over the structure to be protected, yet providing an equivalent degree of protection to that of conventional sacrificial anodes. The invention, hereafter also named cathodic protection by distributed sacrificial anodes (DSA), can effectively reduce the total cathode area entirely, or reduce the same to small defects accounting for a small fraction of the total surface area of the component, or be used in combination with conventional sacrificial anodes in case larger areas have to be traditionally coated, e.g. paint systems and other non-conductive coatings.

### BACKGROUND AND PRIOR ART

Electrochemical corrosion is a process that is initiated when an electrically conductive metal structure gets in contact with an electrically conductive substance, such as wet soil or water which can contain various oxi%dants. In subsea systems, seawater acts as the electrolyte of a galvanic cell in which a current passes from an anode site to a cathode site of a submerged metal structure, causing electrochemical changes that result in corrosion products in the metal. During uniform dissolution of a ferrous metal structure submerged in seawater, e.g., positively charged iron ions (Fe²⁺) are released into water from the anode site while the freed electrons (e⁻) move to the cathode site in the surface of the metal. At the cathode site a reduction reaction takes place in which the electrons are transferred to dissolved oxygen (O₂) and water (H₂O) to form hydroxide ions (OH⁻) and hydrogen, depending on the pH and temperature of the electrolyte. Ferrous ions combine with hydroxide ions to form iron hydroxide (Fe(OH)²), or rust. If no measure is taken to prevent electrochemical corrosion the entire structure may be affected. Non-ferrous metals react in a similar way forming different types of corrosion products.

In the absence of a preventive measure, for example, cathodic protection, the portion of the structure that has the lowest free corrosion potential will be subject to active dissolution.

Cathodic protection is a method to combat corrosion in which the structure to be protected is made the net cathode in a galvanic cell. When properly designed, a cathodic protection system can reduce corrosion rates by more than 2 orders of magnitude or supress corrosion entirely.

In sacrificial cathodic protection, an active metal, i.e. a metal or alloy that has a free corrosion potential that is lower than that of the structure to be protected, is electrically connected to the structure. In this electric circuit, the metal with the lowest (i.e. the more negative) free corrosion potential becomes the net anode, while the structure becomes the net cathode. Corrosion of the more active metal polarizes the structure to potentials below its free corrosion potential, reducing or supressing corrosion depending on the coupled potential. In subsea applications, e.g., the typical cathodic protection potential by sacrificial aluminium-based anodes is in the order of -1.1 to -1.0 V vs. Ag/AgCl|seawater. Nevertheless, as a rule of thumb, a structure is considered protected against corrosion when it is polarized below -0.8 V vs. Ag/AgCl|seawater.

Sacrificial anodes are made of metals and alloys that will readily corrode in the given environment. Metals that are anodic to most engineering alloys used in subsea oil and gas production are based on aluminium and zinc, which can be used as sacrificial anodes in substantially pure form or as alloys. Today, the oil and gas industry has standardized in the Al-Zn-In system, whereas the use of Zn-based anodes is discouraged due to passivation and polarity reversal in seawater.

Sacrificial cathodic protection of submerged equipment in subsea oil and gas production and transport often requires some considerable anode mass to protect remote subsea components. Anode demand is traditionally determined by international standards such as DNV RP B401 (Det Norske Veritas' recommended practice) and ISO 12473. A total anode mass in the order of several tens of tonnes is not unusual for a subsea oil and gas system. The total tonnage of the CP system adds to the total weight and complexity of the structures, adding considerable installation, operation, and maintenance costs.

In the past, several attempts have been made to avoid the need for great anode masses to achieve corrosion protection of buried or submerged equipment. One strategy which has several followers in the literature is the application of thin coatings onto the exterior of an object that needs protection.

One example of this strategy can be found in US 2015/226365 A1. In this invention, an iron-based piping element is coated with an inner layer that is anodic to the iron base. An outer layer about 1-5 mm thick is made of polyethylene or polypropylene resin. The outer layer provides a dielectric sealant on top of the inner layer.

Another example from the same strategy can be found in CN 2536879. An oil pipe is coated with an inner layer that is anodic to the pipe base. The inner layer is protected by a top layer made of epoxy resin and is dielectric.

A similar approach can be found in CN 201187267 which discloses a multilayer variant of anticorrosive protection by coatings. A first passivating layer of duplex stainless steel is applied to the exterior of an oil or gas pipe. A second layer 100-150 µm thick is applied to the first layer, the second layer being anodic to the first layer and pipe base. A 10-50 µm thick sealant is applied as top coating.

CN 101 033 552 A discloses a double layer aluminium alloy composite sacrificial anode.

Another multilayer coating system is disclosed in US 8697251 B2. A metal substrate is coated with an inner layer, an outer layer and an intermediate layer. The inner layer is anodic to the metal substrate. The intermediate layer is anodic to one or both of the substrate and the inner layer. The outer layer is an oxide and functions as a dielectric coating thus preventing electrochemical contact between the underlying layers and the surroundings. Aluminium oxide (Al₂O₃) is mentioned as a suitable dielectric in the outer layer of the multilayer coating system. The total thickness of the system amounts to about 250 µm, whereas the thickness of the intermediate layer, functioning as sacrificial anode, is about 50-75 µm.

A problem in multilayer coating systems such as the one disclosed in US 8697251 B2 is that corrosion of an underlying layer can cause blistering and separation between layers. This problem arises when the surface of a lower layer corrodes and corrosion products are formed. The corrosion products have poor mechanical properties and are typically subject to swelling, which can be due to the formation of hydrates or due to the corrosion products being soluble in water. An additional complication is that the external layer of these systems, i.e., the one exposed to the corrosive fluid, is either a dielectric or an electric insulator. Thus, the solutions as mentioned above primarily rely on the integrity of the barrier coating. If forming part of a subsea system, those areas must be taken into consideration in the cathodic protection design.

### SUMMARY OF THE INVENTION

The present invention is defined in the accompanying claims.

In general terms, the present invention reduces or suppresses anode consumption by reducing or eliminating the total cathode area to be protected. The invention drastically reduces anode mass while maintaining a degree of corrosion protection identical to that of CP by conventional Al-based sacrificial anodes (e.g., stand-off, flush-mount or bracelet anodes).

An object of the present invention is to provide a cathodic protection system for corrosion protection of a ferrous or non-ferrous metal substrate.

This object is met by a system as defined in appended system claims.

Another object of the present invention is to provide a method for applying cathodic protection to a ferrous or non-ferrous metal substrate.

This object is met by a method defined in appended method claims.

Still another object of the present invention is to provide a corrosion resistant subsea component intended for transport of hydrocarbon fluid via a lumen or passage through a body made of ferrous or non-ferrous metal.

This object is met by a component defined in appended component claims.

Thus, in a first aspect, the present invention is a cathodic protection system according to claim 1, for a metal component or substrate comprising:
- a metallic first-layer coating which is anodic to the substrate, bonded to the component or substrate and electrically conductive,
- a sacrificial anode in the form of a metallic second-layer coating distributed over the first-layer coating, the second layer coating having an open circuit potential that is equal to the metallic first-layer coating or being anodic to the first-layer coating, the second-layer coating electrically conductive, bonded to the first-layer coating and exposed to the surrounding environment.

An essential aspect of the second-layer coating that is exposed to the environment is that it matches the electrochemical properties (i.e. free corrosion potential and current capacity) of a conventional sacrificial anode which is replaced in full or in part by the second-layer coating. The second-layer coating functions as sacrificial anode supplying current to defects or uncovered areas or adjacent structures, as appropriate.

Since the sacrificial anode is distributed over the structure, the total cathode area is reduced or eliminated.

Distributing the anode also reduces problems associated with Ohmic drop, and improves current distribution.

Defects in the second-layer coating that could potentially lead to exposure of the underlying first-layer coating or the substrate, such as mechanically caused defects induced during handling or installation, e.g., can be assumed to be limited to small portions of the entire protected area. A total maximum of, e.g., one percent (1%) defect area in the outer coating is a moderate prediction, yet illustrating the potential benefit achievable by reducing the cathode area.

Because the proposed invention reduces total cathode area by distributing the sacrificial anode over the entire structure to be protected, the saving in total anode mass is substantial. The reduction in anode by virtue of the proposed CP by DSA is illustrated by the following comparative example:
A planned pipeline end termination (PLET) assembly for an eight well, three manifold scheme of a gas field development situated some 130 km off the shore at a tropic/subtropic water depth of approximately 200 m would require a calculated gross mass of conventional anodes of approximately 26,000 kg in sacrificial cathodic protection designs when following the DNV-RP-B401 guidelines.

With an assumed defect area of 1% in the DSA the same components would need a total conventional anode mass of approximately 2,000 kg, equalling a weight reduction of conventional anodes of about 92%. The reduction in conventional anode mass equals about 20% of the total weight of the PLET.

The first-layer coating contains essentially pure metallic aluminium or aluminium alloy.

The choice of aluminium for the first-layer coating results in reduced demand for sacrificial anode mass as compared to the anode demand required to protect a bare metallic component or substrate.

Likewise, the second-layer coating is made of an aluminium alloy that has identical open circuit potential or being anodic to the first-layer coating. The second-layer coating is also anodic to the component or substrate.

The chemical composition of the second-layer coating exposed to the environment preferably matches that of a conventional sacrificial anode, which is replaced in full or in part by the sacrificial second-layer coating.

The surface exposed to the environment is made of an aluminium-zinc-indium (Al-Zn-In) alloy or other aluminium alloy with electrochemical properties matching those of the Al-Zn-In alloy.

The second-layer coating may be an Al alloy comprising Zn in the range of 2-7% and In in the range of 0.01-0.05%.

The first-layer coating preferably has a thickness in the range of 100-300 µm. The second-layer coating has a thickness of at least more than 200 µm, preferably in the range of 200-3,000 µm, and most preferred from 300 to 1,500 µm.

The thickness of the second-layer coating that is exposed to the environment will be determined based on the self-corrosion rate of the component or substrate and the required minimum thickness by the end of the service life of the component. Based on the results of internal research activities, a thickness of 50 µm per 10 years of service is a conservative value for the PLET example discussed above.

The second-layer coating is distributed over essentially the entire surface of the inner coating.

The first-layer and second-layer coatings are preferably distributed over essentially the entire area of the component or substrate that is exposed to a corrosive environment, or to the maximum extent practically possible.

In a second aspect, the present invention provides a method for cathodic protection of a metallic component or substrate as claimed in claim 3. The method comprises:
- applying a metallic first-layer coating that being anodic to the component or substrate through a first deposition method,
- distribution of sacrificial anode over the first-layer coating by applying a metallic second layer coating that has open circuit potential equal to the metallic first-layer coating or being anodic to the first-layer coating through a second deposition method.

The first and second deposition methods can be chosen from deposition methods such as hot dip galvanization, co-lamination, co-extrusion, and explosion bonding, as well as any deposition method referred to as metal spraying including but not limited to one of detonation spraying, flame spraying, high-velocity liquid fuel spraying, high-velocity air fuel spraying, high-velocity oxygen fuel spraying, plasma spraying, arc spraying and cold spraying, the first and second deposition methods being the same or different from each other.

Embodiments of the method comprise deposition of essentially pure metallic aluminium or aluminium alloy to a thickness of 100-300 µm to form the first-layer coating of the component or substrate.

The method further comprises deposition of metallic aluminium alloy that has open circuit potential equal to the metallic first-layer coating or is anodic to the metallic first-layer coating to form a second-layer coating having a thickness of at least more than 200 µm, preferably in the range of 200-3,000 µm, and most preferred from 300 to 1,500 µm.

The method comprises feeding a metallic composition comprising aluminium, zinc, and indium to a metal deposition process for deposition of a sacrificial anode coating onto the first-layer coating.

In a third aspect, the present invention provides a component as claimed in claim 6. The component is designed for subsea use and is made of ferrous or non-ferrous metal, wherein in submerged state the component is at least partly exposed to seawater. On at least the exposed surface thereof the component is applied
a first-layer coating consisting of essentially pure aluminium or aluminium alloy, the first-layer coating shielded from seawater by
a second-layer coating in contact with seawater, the second-layer coating containing aluminium alloy being anodic to aluminium and to the component.

The component may be designed for transport of hydrocarbon fluid via a lumen or passage through a body made of ferrous or non-ferrous metal.

The component is covered by a sacrificial anode coating containing an aluminium-zinc-indium (Al-Zn-In) alloy.

In accordance with the aforesaid, the sacrificial anode covering the component has a thickness of at least more than 200 µm, preferably in the range of 200-3,000 µm, and most preferred from 300 to 1,500 µm. The first-layer coating preferably has a thickness of 100-300 µm.

Without exclusion of others not mentioned, the component can be realized at least as one of the following subsea components:
- trees
- blow out preventers
- tools
- pipelines
- flowlines
- jumpers
- manifolds
- connectors and connections
- pressure vessels
- housings and hulls
- pumps or compressor parts
- valves
- flow meters
- sensors
- control system modules
- umbilicals and associated termination assemblies
- risers and riser bases
- suction anchors and mud mats
- support structures
and connections therefor.

The invention can be applied to components used for oil or gas related equipment, but also e.g. for wind mills, fish farming facilities, any cable or pipeline structure at least partly submerged in seawater, ships and vessels, etc.

In accordance with the specifications of the cathodic protection system and method described above the component is covered by a distributed sacrificial anode mass containing an aluminium-zinc-indium alloy, or other aluminium alloy with corresponding electrochemical properties.

### SHORT DESCRIPTION OF THE DRAWINGS

The invention will be further explained below with reference made to the accompanying, schematic drawings. In the drawings
Fig. 1 illustrates anode demand for bare and coated carbon steel,
Fig. 2 is a schematic section through a cut out portion of the sacrificial cathodic protection system applied to a metal substrate, and
Fig. 3 is a cross sectional view through a component intended for subsea transport of hydrocarbon fluid.
Figs. 4a and 4b are diagrams showing a prior art coating and the new coating respectively, compared to anode protection, in terms of protection current density as a function of exposure time in seawater, and
Figs. 5a and 5b are sample photos of a prior art coating and the new coating respectively subjected to electrochemical testing under exposure to seawater.

### DETAILED DESCRIPTION OF PREFERRED EMBODIMENTS

The use of protective coatings is not exclusively applicable to subsea structures, but applies generally also to buried pipelines or in protection against atmospheric exposure.

It shall also be noted, that if not otherwise stated, any statement on percentage of constituents given herein refers to percentage by weight.

In subsea cathodic protection CP, codes like DNV-RP-B401 establish coating degradation factors to account for the normal aging process of different coating systems. While initial coating breakdown factors are typically small, they approach a value of 1 by the end of the service life of the substructure.

In subsea CP design, the entire surface area of the component must be accounted for in CP calculations because it is cathodic to the conventional anodes. Conversely, surface areas of the structure that have an open circuit potential identical to that of the conventional sacrificial anodes will not be included in the CP calculations.

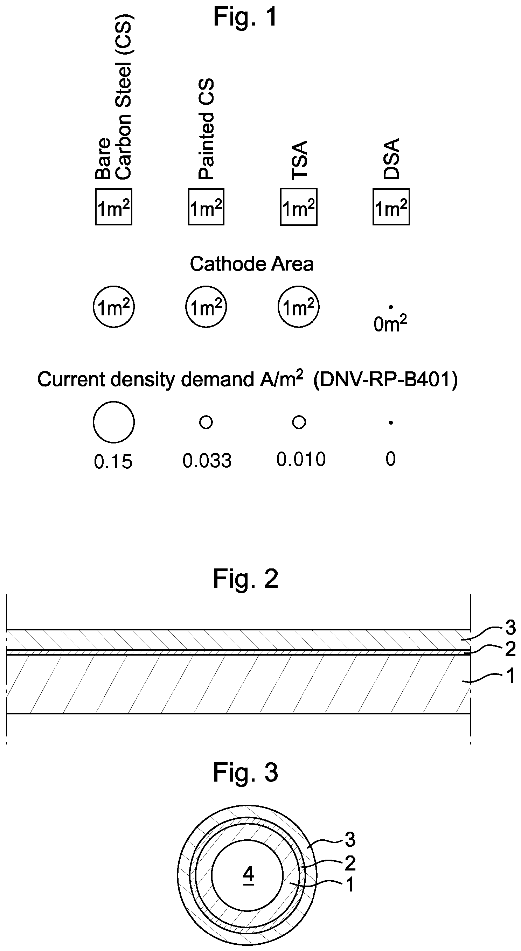

Fig. 1 illustrates an example based on a typical DNV-RP-B401 calculation. In this example a 1m² component shall be provided cathodic protection. As shown in Fig. 1, a sacrificial anode has to provide a current of 150mA to protect bare carbon steel (CS). The application of a non-conductive protective coating, such as paint, reduces the average current demand to 33mA for the same area of painted CS. Thermally sprayed aluminium (TSA) can further reduce the current demand to 10mA for same area. As it will be explained below, the distributed sacrificial anode (DSA) of the present invention will eliminate current demand from conventional anodes for surface areas that have been converted to DSA areas.

In Fig. 2, reference number 1 refers to the bulk material of a metallic object forming a substrate to be protected by a cathodic protection system, the system comprising a first-layer coating 2 that is applied to the surface of the substrate 1, and a second-layer coating 3 applied on top of the first-layer coating 2.

The substrate 1 can be an object of any ferrous or non-ferrous metal that needs either protection from a corrosive environment such as wet soil, water and moist air, or an object which has to be covered to reduce the total anode consumption of a CP system. In subsea applications, the substrate would typically be a component involved in the subsea production and/or transport of oil, gas or water, such as a pipeline, a manifold structure, a pump or compressor part etc., typically having a lumen or passage 4 for transport of fluid through a body of metal 1. The substrate 1 can thus in practise take any form including planar, curved and double-curved shapes, and the coated surface of the substrate can be situated on the exterior or on the interior of the substrate.

The first-layer coating 2 may comprise any metal or metal alloy that is anodic to the substrate, is electrically conductive and can form a bond to the substrate. The second-layer coating 3 may comprise any metal or metal alloy that has an open circuit potential equal to the metallic first-layer coating or is anodic to the first-layer coating and the substrate, is electrically conductive and which can form a mechanical bond to the first-layer coating. In all cases the metals or metal alloys of the first- and second-layer coatings shall be related in the galvanic series such that the second-layer coating 3 forms a sacrificial anode for the first-layer coating 2 or the substrate, and the first-layer coating shall never be anodic to the second-layer coating

In preferred embodiments, the first-layer coating 2 contains essentially pure metallic aluminium or aluminium alloy. Pure aluminium or aluminium alloy is preferred in this case to reduce the anode demand when compared to the anode demand required to protect the substrate. The pureness of the first-layer coating may be in the range of 85-100% Al. The first-layer coating may alternatively be an aluminium alloy. In preferred embodiments, the first-layer coating 2 contains 99.5% Al, or an Al-alloy containing 5% magnesium (Al5Mg).

Aluminium alloy anodic to pure aluminium and to the substrate is preferred as the second-layer coating 3. The composition in the second-layer coating 3 is an aluminium-zinc-indium (Al-Zn-In) alloy.

In the Al-Zn-In alloy the zinc constitutes about 2-7% of the composition, indium amounts to about 0.01-0.05%, whereas aluminium constitutes the balance. As will be understood from the aforesaid the composition of the second-layer coating 3 may be similar to that of conventional sacrificial aluminium anodes used to protect subsea components.

Application of the first- and second-layer coatings to the substrate may include any suitable application process such as co-lamination, co-extrusion and explosion bonding, e.g., wherever this can be permitted with respect to the design of the substrate, such as in connection with planar plates, pipes and rods of continuous radius. For more complicated shapes, metal spraying is the preferred method for deposition of both the first-layer coating 2 and the second-layer coating 3.

Metal spraying is a general name for several processes in which pure or alloyed metal is melted in a flame or arc and sprayed onto a substrate by means of compressed air or explosion gases. Micrometre-sized droplets of metal are this way created and projected towards the surface of the substrate. By repeating the process, droplets will successively accumulate to form a coating.

Under the general concept of metal spraying several variations which are suitable for deposition of the first- and second-layer coatings 2 and 3 can be distinguished, such as plasma spraying, detonation spraying, wire arc spraying, flame spraying, high velocity oxy-fuel spraying, warm spraying or hot spraying, cold spraying, e.g.

A key feature in the present invention is the provision of a sacrificial anode coating 3 which is distributed over essentially the entire area of the substrate/component that is exposed to a corrosive environment. The thickness of the second-layer coating 3 is determined by the self-corrosion rate over the service life of the component, whereas the total thickness is a function of the estimated current demand to protect any defect area(s) in the second-layer coating.

It is assumed that the Al-Zn-In anode composition in the second-layer coating 3 of the preferred embodiment is favoured by a uniform corrosion which affects and reduces the need for layer thickness. A layer thickness in the range of 300-1,500 µm is preferred and well within the capacity of metal spraying methods. The preferred range will also cover most applications in terms of service life and operational conditions. It is however within the scope of the invention to increase the layer thickness of the second-layer coating 3 up to about 3,000 µm if required, whereas above that range the benefit of weight reduction as compared to fitting of conventional anodes will be less obvious. In any case, the thickness of the second-layer coating 3 should not be less than 200 µm.

As already has been stated in other parts of the disclosure the thickness of the inner coating 2 is preferably within 100-300 µm.

From the above specification of the cathodic protection system it is appreciated that the second-layer coating 3 constitutes a sacrificial anode mass which is distributed over the substrate and protected component, and which is in direct contact with the environment that surrounds the component. The predominant material in both the first- and second-layer coatings is metallic aluminium which provides electrical conductivity and good bonding properties between the coatings themselves and towards a substrate of ferrous metal and of non-ferrous metal as well.

The distributed sacrificial anode of the second-layer coating may also be used in combination with conventional sacrificial anodes in case larger areas have to be traditionally coated, e.g. through paint systems or other non-conductive coatings. In all cases the invention as claimed provide substantial reduction in anode mass and weight whenever applied in a structure that is subjected to a corrosive environment.

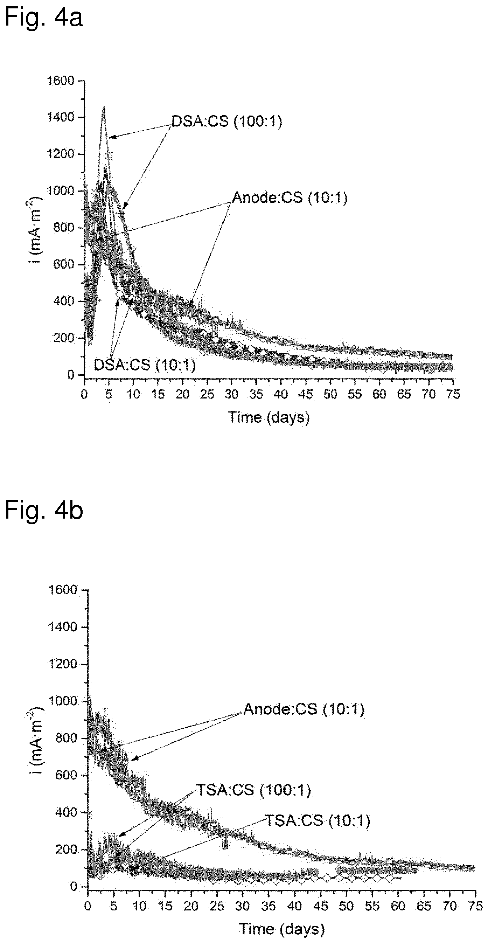

Figs. 4a and 4b show that thermally sprayed Al2.5Zn0.02In alloy (DSA) coated on carbon steel differs from thermally sprayed Al5Mg alloy (regular TSA) coated on carbon steel in terms of electrochemical performance in seawater. In this example, the efficacy of DSA vs. that of TSA is illustrated by protection current density vs. time. DSA coated on carbon steel reveals similar or identical behaviour as a traditional cast Al-Zn-In anode coupled to carbon steel in terms of protection current density vs. time, whereas TSA coated on carbon steel reveals a behaviour that differs from that of DSA and cast Al-Zn-In anode coupled to carbon steel.

Conclusively, Figs. 4a and 4b show that thermally sprayed Al2.5Zn0.02In alloy (DSA) coated on carbon steel differs from thermally sprayed Al5Mg alloy (regular TSA) coated on carbon steel in terms of electrochemical performance in seawater, in this example illustrated by protection current density vs. time.

For the experiments, samples designated DSA were prepared by first applying Al-Zn-In-alloy to carbon steel panels by thermal spraying, then samples were cut to size and finally prepared for electrochemical testing by effectively sealing off all carbon steel surfaces of the sample, leaving DSA as the only metallic part of the samples being exposed to seawater. Samples designated TSA were prepared for electrochemical testing in the exact same way as for DSA, except for using Al5Mg alloy in the thermal spraying process. Samples designated CS were prepared from bare carbon steel plates that were cut to size and sealed off as required for attaining the desired surface area ratios of the various couples.

In the electrochemical experiments performed in fresh, circulated natural seawater, DSA samples were then coupled to CS samples in two different ratios; DSA:CS 100:1 (grey) and DSA:CS 10:1 (blue), simulating different defect sizes (see Fig. 4a).

Similarly, TSA samples were coupled to CS samples in two different ratios; TSA:CS 100:1 (grey) and TSA:CS 10:1 (blue). For use as reference, Anode samples directly cut from a cast Al-Zn-In-anode were coupled to CS in a ratio of Anode:CS 10:1 (red), see Fig. 4b.

The resulting protection current densities (mA/m²) plotted as a function of time (days) in Figs. 4a and 4b reveal that (i) DSA differs from TSA and (ii) DSA is similar or identical to the conventional Al-Zn-In cast Anode.

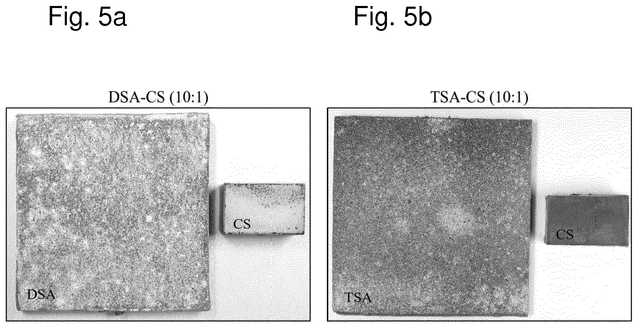

Figs. 5a and 5b display that after electrochemical testing, carbon steel coupled to thermally sprayed Al2.5Zn0.02In alloy (DSA) differs from carbon steel coupled to thermally sprayed Al5Mg alloy (regular TSA) in terms of both the quantity of calcareous deposits and the level of corrosion on the exposed carbon steel surface. Carbon steel samples, when coupled to thermally sprayed Al2.5Zn0.02In alloy (DSA) and exposed to seawater, show significant build-up of calcareous deposits and no signs of corrosion. In contrast, when coupled to thermally sprayed Al5Mg alloy (TSA) and exposed to seawater, carbon steel samples show that corrosion of carbon steel had occurred.

Thereby, Fig. 5a illustrates that after electrochemical testing performed as described above, when coupled to thermally sprayed Al2.5Zn0.02In alloy (DSA) and exposed to seawater for 30 days, carbon steel (CS) samples show no sign of corrosion (but a noticeable build-up of calcareous deposits). In contrast, Fig. 5b illustrates that when coupled to thermally sprayed Al5Mg alloy (TSA) and exposed to seawater for 30 days, the carbon steel samples show corrosion of the carbon steel. The area ratios of samples in the photographs are DSA:CS 10:1 and TSA:CS 10:1.

Although illustrated by way of example, a skilled person will realize that the technical effects and benefits of the cathodic protection system of the present invention is achievable within ranges, whereby modification of the invention within the language and wording of the claims is possible, and that any such modification, also if not literally meeting the claim language, is covered by the scope of protection as defined and afforded by the claims.

## Claims

1. A cathodic protection system for a metal component or substrate (1) to be exposed to a corrosive environment such as seawater comprising:
a metal component or substrate (1);
a metallic first-layer coating (2) being anodic to the component or substrate (1), bonded to the component or substrate and electrically conductive, the first-layer coating (2) containing essentially pure metallic aluminium or an aluminium alloy;
a sacrificial anode in the form of a metallic second-layer coating (3) distributed over the first-layer coating (2), the second layer coating (3) having an open circuit potential that is equal to the first-layer coating (2) or being anodic to the first-layer coating (2), the second-layer coating (3) being electrically conductive, bonded to the first-layer coating (2),
**characterized in that** the second-layer coating (3) is an aluminium-zinc-indium (Al-Zn-In) alloy comprising Zn in the range of 2-7%, In in the range of 0.01-0.05% and the balance aluminium;
wherein the second-layer coating (3) is distributed over essentially the entire surface of the first-layer coating;
wherein the second-layer coating has a thickness at least more than 200 µm, preferably in the range of 200-3,000 µm, and most preferred from 300 to 1,500 µm.

2. The system of claim 1, wherein the first-layer coating (2) has a thickness in the range of 100-300 µm.

3. A method for cathodic protection of a metal component or substrate (1), the method comprising the steps of:
applying a metallic first-layer coating (2) being anodic to the substrate (1) through a first deposition method,
distributing a sacrificial anode (3) over the first-layer coating (2) by
applying a metallic second-layer coating (3) that has an open circuit potential equal to the metallic first-layer coating or is anodic to the first-layer coating (2) through a second deposition method;
feeding a metallic composition comprising Zn in the range of 2-7%, In in the range of 0.01-0.05% and the balance aluminium to a metal deposition process for deposition of the sacrificial anode coating (3) onto the first-layer coating (2);
the second-layer coating (3) having a thickness at least more than 200 µm, preferably in the range of 200-3,000 µm, and most preferred from 300 to 1,500 µm.

4. The method of claim 3, wherein the first and second deposition methods being chosen from deposition methods such as hot dip galvanization, co-lamination, co-extrusion, explosion bonding, as well as any deposition method referred to as metal spraying including but not limited to one of detonation spraying, flame spraying, high-velocity liquid fuel spraying, high-velocity air fuel spraying, high-velocity oxygen fuel spraying, plasma spraying, arc spraying and cold spraying, the first and second deposition methods being the same or different from each other.

5. The method of claim 3 or 4, comprising deposition of essentially pure metallic aluminium or aluminium alloy to a thickness of 100-300 µm to form the first-layer coating (2) of the component or substrate.

6. A subsea component made of ferrous or non-ferrous metal, wherein in submerged state the component is at least partly exposed to seawater, comprising the system of any of claims 1 to 2.

7. The component of claim 6, wherein the component has a lumen or passage (4) through a body (1) made of ferrous or non-ferrous metal.

## Patentansprüche

1. Kathodisches Schutzsystem für ein Metallbauteil oder Substrat (1), das einer korrosiven Umgebung wie Meerwasser auszusetzen ist, umfassend:
ein Metallbauteil oder Substrat (1);
eine metallische Erstschicht-Beschichtung (2), die gegenüber dem Bauteil oder Substrat (1) anodisch ist, an das Bauteil oder Substrat gebunden und elektrisch leitfähig ist, wobei die Erstschicht-Beschichtung (2) im Wesentlichen reines metallisches Aluminium oder eine Aluminiumlegierung enthält;
eine Opferanode in der Form einer metallischen Zweitschicht-Beschichtung (3), die über die Erstschicht-Beschichtung (2) verteilt ist, wobei die Zweitschicht-Beschichtung (3) ein Leerlaufpotential aufweist, das gleich dem der Erstschicht-Beschichtung (2) ist oder anodisch zu der Erstschicht-Beschichtung (2) ist, wobei die Zweitschicht-Beschichtung (3) elektrisch leitfähig ist, gebunden an die Erstschicht-Beschichtung (2),
**dadurch gekennzeichnet, dass** die Zweitschicht-Beschichtung (3) eine Aluminium-Zink-Indium-Legierung (Al-Zn-In-Legierung) ist, umfassend Zn in dem Bereich von 2-7 %, In in dem Bereich von 0,01-0,05 % und als Rest Aluminium;
wobei die Zweitschicht-Beschichtung (3) über im Wesentlichen die gesamte Oberfläche der Erstschicht-Beschichtung verteilt ist;
wobei die Zweitschicht-Beschichtung eine Dicke von mindestens mehr als 200 µm, vorzugsweise in dem Bereich von 200-3.000 µm und am meisten bevorzugt von 300 bis 1.500 µm aufweist.

2. System nach Anspruch 1, wobei die Erstschicht-Beschichtung (2) eine Dicke in dem Bereich von 100-300 µm aufweist.

3. Verfahren für einen kathodischen Schutz eines Metallbauteils oder Substrats (1), das Verfahren umfassend die Schritte:
Aufbringen einer metallischen Erstschicht-Beschichtung (2), die gegenüber dem Substrat (1) anodisch ist, durch ein erstes Abscheidungsverfahren,
Verteilen einer Opferanode (3) über der Erstschicht-Beschichtung (2) durch
Aufbringen einer metallischen Zweitschicht-Beschichtung (3), die ein Leerlaufpotential aufweist, das gleich dem der metallischen Erstschicht-Beschichtung ist oder anodisch zu der Erstschicht-Beschichtung (2) ist, durch ein zweites Abscheidungsverfahren;
Zuführen einer metallischen Zusammensetzung, umfassend Zn in dem Bereich von 2-7 %, In in dem Bereich von 0,01-0,05 % und als Rest Aluminium, zu einem Metallabscheidungsprozess zum Abscheiden der Opferanodenbeschichtung (3) auf die Erstschicht-Beschichtung (2);
wobei die Zweitschicht-Beschichtung (3) eine Dicke von mindestens mehr als 200 µm, vorzugsweise in dem Bereich von 200-3.000 µm und am meisten bevorzugt von 300 bis 1.500 µm aufweist.

4. Verfahren nach Anspruch 3, wobei die ersten und zweiten Abscheidungsverfahren ausgewählt sind aus Abscheidungsverfahren wie Feuerverzinken, Co-Laminieren, Co-Extrusion, Explosionsbonden, sowie jedem beliebigen Abscheidungsverfahren, das als Metallspritzen bezeichnet wird, einschließlich, aber nicht beschränkt auf eines von Detonationsspritzen, Flammspritzen, Hochgeschwindigkeits-Flüssigbrennstoffspritzen, Hochgeschwindigkeits-Luftbrennstoffspritzen, Hochgeschwindigkeits-Sauerstoffbrennstoffspritzen, Plasmaspritzen, Lichtbogenspritzen und Kaltgasspritzen, wobei die ersten und zweiten Abscheidungsverfahren gleich oder voneinander verschieden sind.

5. Verfahren nach Anspruch 3 oder 4, umfassend die Abscheidung von im Wesentlichen reinem metallischem Aluminium oder Aluminiumlegierung auf eine Dicke von 100-300 µm, um die Erstschicht-Beschichtung (2) des Bauteils oder Substrats auszubilden.

6. Unterwasserbauteil, hergestellt aus Eisen- oder Nichteisenmetall, wobei in einem eingetauchten Zustand das Bauteil mindestens teilweise Meerwasser ausgesetzt ist, umfassend das System nach einem der Ansprüche 1 bis 2.

7. Bauteil nach Anspruch 6, wobei das Bauteil ein Lumen oder einen Durchgang (4) durch einen Körper (1), hergestellt aus Eisen- oder Nichteisenmetall, aufweist.

## Revendications

1. Système de protection cathodique destiné à un composant ou substrat (1) en métal devant être exposé à un environnement corrosif tel que de l'eau de mer comprenant :
un composant ou substrat (1) en métal ;
un revêtement de première couche (2) métallique étant anodique par rapport au composant ou substrat (1), lié au composant ou substrat et électriquement conducteur, le revêtement de première couche (2) contenant de l'aluminium métallique essentiellement pur ou un alliage d'aluminium ;
une anode sacrificielle sous la forme d'un revêtement de seconde couche (3) métallique réparti par-dessus le revêtement de première couche (2), le revêtement de seconde couche (3) ayant un potentiel de circuit ouvert qui est égal au revêtement de première couche (2) ou étant anodique par rapport au revêtement de première couche (2), le revêtement de seconde couche (3) étant électriquement conducteur, lié au revêtement de première couche (2),
**caractérisé en ce que** le revêtement de seconde couche (3) est un alliage aluminium-zinc-indium (Al-Zn-In) comprenant Zn dans la plage de 2 à 7 %, In dans la plage de 0,01 à 0,05 % et le solde d'aluminium ;
dans lequel le revêtement de seconde couche (3) est réparti par-dessus essentiellement la surface entière du revêtement de première couche ;
dans lequel le revêtement de seconde couche a une épaisseur d'au moins plus de 200 µm, de préférence dans la plage de 200 à 3000 µm, et le plus préférablement de 300 à 1500 µm.

2. Système selon la revendication 1, dans lequel le revêtement de première couche (2) a une épaisseur dans la plage de 100 à 300 µm.

3. Procédé destiné à la protection cathodique d'un composant ou substrat (1) en métal, le procédé comprenant les étapes consistant à :
appliquer un revêtement de première couche (2) métallique étant anodique par rapport au substrat (1) par le biais d'un premier procédé de dépôt,
la répartition d'une anode sacrificielle (3) par-dessus le revêtement de première couche (2) par
l'application d'un revêtement de seconde couche (3) métallique qui a un potentiel de circuit ouvert égal au revêtement de première couche métallique ou est anodique par rapport au revêtement de première couche (2) par le biais d'un second procédé de dépôt ;
l'alimentation d'une composition métallique comprenant Zn dans la plage de 2 à 7 %, In dans la plage de 0,01 à 0,05 % et le solde d'aluminium à un processus de dépôt de métal destiné au dépôt du revêtement d'anode sacrificielle (3) sur le revêtement de première couche (2) ;
le revêtement de seconde couche (3) ayant une épaisseur d'au moins plus de 200 µm, de préférence dans la plage de 200 à 3000 µm, et le plus préférablement de 300 à 1500 µm.

4. Procédé selon la revendication 3, dans lequel les premier et second procédés de dépôt sont choisis parmi des procédés de dépôt tels que galvanisation par immersion à chaud, co-laminage, co-extrusion, liaison par explosion, ainsi que l'un quelconque procédé de dépôt désigné par pulvérisation de métal y compris, mais sans s'y limiter l'une parmi pulvérisation par détonation, pulvérisation à la flamme, pulvérisation à grande vitesse de combustible liquide, pulvérisation à grande vitesse d'un mélange air-combustible, pulvérisation à grande vitesse d'un mélange oxygène-combustible, projection plasma, projection à l'arc et projection à froid, les premier et second procédés de dépôt étant identiques ou différents l'un par rapport à l'autre.

5. Procédé selon la revendication 3 ou 4, comprenant le dépôt d'aluminium métallique essentiellement pur ou d'un alliage d'aluminium à une épaisseur de 100 à 300 µm pour former le revêtement de première couche (2) du composant ou substrat.

6. Composant sous-marin fabriqué en métal ferreux ou non ferreux, dans lequel dans un état immergé le composant est au moins partiellement exposé à de l'eau de mer, comprenant le système selon l'une quelconque des revendications 1 à 2.

7. Composant selon la revendication 6, dans lequel le composant a une lumière ou un passage (4) à travers un corps (1) fabriqué en métal ferreux ou non ferreux.
